# EUROPEAN PATENT SPECIFICATION

(11) **EP 2 789 560 B1**
(45) Date of publication and mention of the grant of the patent: **31.01.2018**
(21) Application number: 12856348.3
(22) Date of filing: 06.12.2012
(51) Int. Cl.: B65H 75/10, B65H 18/00, H01G 11/52, H01M 2/14, H01M 2/16, H01M 8/0289

(54) **MICROPOROUS MEMBRANE ROLL AND METHOD OF MANUFACTURING SAME**
WALZE MIT MIKROPORÖSEN MEMBRANEN UND VERFAHREN ZU SEINER HERSTELLUNG
ROULEAU À MEMBRANE MICROPOREUSE ET SON PROCÉDÉ DE FABRICATION DE CELUI-CI

(30) Priority: 07.12.2011 JP 2011267661
(43) Date of publication of application: 15.10.2014
(73) Proprietor: Toray Industries, Inc., Tokyo 103-8666 (JP)
(72) Inventor: IIZUKA Takanori, Nasushiobara-shi Tochigi 329-2763 (JP); YAMADA Kazuhiro, Nasushiobara-shi Tochigi 329-2763 (JP); NAKAJIMA Hiroki, Otsu-shi Shiga 520-8558 (JP); TANAKA Harumi, Otsu-shi Shiga 520-8558 (JP); YOSHINO Ozora, Mishima-shi Shizuoka 411-8652 (JP)
(74) Representative: Prüfer & Partner mbB Patentanwälte · Rechtsanwälte
(86) International application number: PCT/JP2012/081636
(87) International publication number: WO 2013/084988

(56) References cited:
- WO-A1-2009/069533
- WO-A1-2011/024849
- WO-A1-2011/024849
- JP-A- H10 154 501
- JP-A- H10 154 501
- JP-A- S63 225 055
- JP-A- 2001 302 820
- JP-A- 2005 085 556
- JP-A- 2007 176 034
- JP-Y2- H0 739 912
- JP-Y2- S6 210 298
- US-A- 5 658 683
- US-A1- 2003 077 506

## Description

### Technical Field of the Invention

The present invention relates to a roll into which a microporous membrane is wound on a core, as well as a method of manufacturing the roll. Specifically, it relates to a roll into which a polyolefin microporous membrane, which is usefully used as a separator for batteries, is wound on a core, as well as a method of manufacturing the roll.

### Background Art of the Invention

Microporous membranes are generally used as various kinds of separation membrane or isolation membrane for filters such as filtration membrane and dialysis membrane or for separators such as battery separators and capacitor separators. Above all, the polyolefin microporous membrane is generally used as a separator for fuel cells or secondary cells.

Such a microporous membrane is continuously formed and then is wound on a core into a roll to be supplied. Battery manufacturers as users of such a product unwind a microporous membrane to make batteries from the microporous membrane roll. However, the microporous membrane might retain static electricity to cause troubles such as a bad winding shape, uncomfortable handling ability and malfunction. Further, since the microporous membrane roll is made of multilayer microporous membrane, static electricity might cause a trouble while the electric potential gradually increases as the membrane is unwound. Specifically, battery producing process has been urgently required to prevent such a trouble.

Such a problem about the static electricity is not only caused with microporous membrane but also caused with general films. In order to solve the problem, they disclose technical approaches, such as technology to prevent films from taking charge during a manufacturing process, technology to neutralize charged films and technology to improve a core on which films are wound to suppress the static electricity.

Patent document 1 discloses a resin core which has an electrically conductive portion and an insulative portion to be used for preventing magnetic recording media from taking static charge during a process where the film is wound on the core. Patent document 2 discloses a core covered on the surface as a whole with antistatic agent to be used for preventing liquid polymer film and polyimide film used as flexible circuit boards from taking charge while the electric resistance is set to more than 1 x 10¹⁵Ω on the surface of the wound film. Patent document 4 concerns the manufacture of a housed layer stack comprising the winding of band material onto a winding arbor. Wherein the winding arbor is composed of steel. Furthermore, the band material is an absorbent synthetic material or a cellular material or composed of a polytetrafluorethylene membrane. However, a polytetrafluorethylene membrane can be stretched to contain small pores of varying sizes.

### Prior art documents

### Patent documents

Patent document 1: JP2001-302820-A
Patent document 2: JP2007-176034-A
Patent document 3: WO2011/024849
Patent document 4: US 2003/077506 A1

### Summary of the Invention

### Problems to be solved by the Invention

There have been few effective technologies as a countermeasure against static electricity on a microporous membrane roll, particularly made of polyolefin, after being wound on cores. A polyolefin microporous membrane, which is strongly charged to have opposite polarities on respective surfaces, might be wound to increase the electric potential on the roll by the electric double layer effect. Further, since a microporous membrane tends to cause a tight winding after being wound, a peeling charge derived from a high friction coefficient on the film surface might increase the electric potential on a microporous membrane surface while being unwound from the microporous membrane roll. Such a microporous membrane roll having a high surface potential may have a poor handling ability. Such a poor handling ability (workability) may accompany discomfort, for example when a user loses hold of an unwound microporous membrane charged with static electricity, the microporous membrane might come close to and stick to the microporous membrane roll or surrounding apparatus. Therefore, a technology for suppressing the electric potential increase on the roll has been demanded.

Further, Patent document 3 discloses a microporous membrane roll used as a separator for lithium ion secondary cells and describes how to obtain a microporous membrane having a uniform thickness as well as a desirable static electricity on the roll. However, Patent document 3 only discloses that the static electricity would decrease on the roll if a ratio of the layer number to the winding length (Layer number/Winding length) is decreased. That doesn't provide any fundamental solution as only meaning that the winding length should be decreased and the core diameter should be increased.

Accordingly, it would be helpful to provide a microporous membrane roll in which an electric potential rising is suppressed and a handling ability deterioration caused by the static electricity is suppressed even when a microporous membrane is unwound.

### Means for solving the Problems

The present invention has the following configuration. The present invention provides a microporous membrane roll characterized in that a microporous membrane is wound on a core which is partially or wholly made of an electrically conductive member.

According to the invention, the microporous membrane has a top surface and bottom surface which are charged with reversed polarities of the same value, wherein the polarities of the top surface and the bottom surface are inverted by a ratio of 25% relative to a whole length in a longitudinal direction. In the microporous membrane roll, it is preferable that the microporous membrane has a capacitance of more than or equal to 50pF and less than or equal to 1000pF between an outermost outer periphery and an inner periphery of the core. It is more preferable that an absolute value of back side equilibrium potential is more than or equal to 3V and less than or equal to 150V on the top surface and the bottom surface.

The present invention provides a method of manufacturing a microporous membrane roll, characterized in that a microporous membrane is wound on a core which is partially or wholly made of a electrically conductive member while a surface electric potential is set to -2kV to +2kV on the roll. The roll means a body which is made by winding a microporous membrane having a predetermined width by a predetermined length on a winding surface of a core. The core means a cylindrical core or tube on which a microporous membrane is wound in this specification.

### Effect according to the Invention

The present invention could suppress the surface electric potential rising on the microporous membrane roll. In other words, the present invention could provide a microporous membrane roll having a small surface electric potential and the surface electric potential could be prevented from rising when the microporous membrane is unwound from the microporous membrane roll. Therefore, the handling ability can be improved as preventing such a trouble that unwound microporous membrane sticks to the roll, surrounding tools or apparatus when the microporous membrane is unwound from the microporous membrane roll. As well, the surface electric potential is kept low on the microporous membrane roll, so that the electrostatic adhesion of foreign materials is prevented and the microporous membrane improves in quality.

### Brief explanation of the drawings

[Fig. 1] Fig. 1 shows an outline of a general core, where (a) is a front view and (b) is a side view.
[Fig. 2] Fig. 2 is a correlation chart showing a relation between a length (Winding length) of unwound microporous membrane and a surface electric potential (Roll potential) of a microporous membrane roll.
[Fig. 3] Fig. 3 is a plan view showing an example of core used in Examples.
[Fig. 4] Fig. 4 shows another example of core used in Examples, where (a) is a front view and (b) is a side view.
[Fig. 5] Fig. 5 shows a schematic measurement method of surface electric potential, where (a) is a front view in unwinding process and (b) is a front view in winding process.
[Fig. 6] Fig. 6 is a schematic section view showing an electrically charged microporous membrane.
[Fig. 7] Fig. 7 is a schematic section view showing an electrically charged microporous membrane roll made by winding a microporous membrane on a resinous core, where (a) shows a conventional charged state and (b) is a charged state achieved under the present invention.
[Fig. 8] Fig. 8 is a schematic section view showing an electrically charged microporous membrane roll made by winding a microporous membrane on an electrically conductive core, where (a) shows a conventional charged state and (b) is a charged state achieved under the present invention.

### Embodiments for carrying out the Invention

Hereinafter, the present invention will be explained in detail.

### [Microporous membrane]

It is preferable that a polyolefin microporous membrane is wound on a core. In the following description, the polyolefin microporous membrane will be explained in particular.

### [Polyolefin]

Although a mass average molecular weight (Mw) of polyolefin constituting the microporous membrane is not limited in a specific range, it is usually 1 x 10⁴ to 1 x 10⁷ and is preferably 1 x 10⁵ to 5 x 10⁶.

It is preferable that the polyolefin contains polyethylene (PE). The polyethylene may be ultra-high molecular weight polyethylene (UHMWPE), high density polyethylene (HDPE), medium density polyethylene (MDPE) or low density polyethylene (LDPE). These polyethylene may be a homopolymer of ethylene, and alternatively a copolymer which contains another α-olefin in small quantities.

Though the polyethylene may consist of a single component, it is preferable that it consists of two kinds or more of polyethylene. A polyethylene composition may be composition made from a plurality of UHMWPEs which have different Mws, composition made from similar HDPEs, composition made from similar MDPEs or composition made from similar LDPEs. It may be a polyethylene component mixture made of two kinds or more selected from a group consisting of the UHMWPE, HDPE, MDPE and LDPE.

Above all, the polyethylene composition is preferably made from UHMWPE having Mw of 5 x 10⁵ or more and a polyethylene having Mw of 1 x 10⁴ or more and less than 5 x 10⁵. It is preferable that Mw of UHMWPE is 5 x 10⁵ to 1 x 10⁷, and is preferably 1 x 10⁶ to 5 x 10⁶. The polyethylene of which Mw is 1 x 10⁴ or more and less than 5 x 10⁵ may be HDPE, MDPE or LDPE, and is preferably the HDPE in particular. The polyethylene of which Mw is 1 x 10⁴ or more and less than 5 x 10⁵ may consist of two kinds or more which have different Mws or different densities. It may have been multistage-polymerized. The upper limit of Mw 15 x 10⁶ of the polyethylene composition makes it easy to perform a melt extrusion. It is preferable that the polyethylene component of 100 mass% contains UHMWPE of equal or more than 1 mass%, and preferably 2 to 80 mass%.

Although ratio (Mw/Mn) of Mw to number average molecular weight (Mn) is not limited specifically, it is preferable that the ratio (Mw/Mn) is 5 to 300, and is preferably 6 to 100. Mw/Mn less than 5 would make it difficult to perform an extrusion of polyolefin solution because of excessive amount of high-molecular weight components. On the other hand, Mw/Mn more than 300 would make a microporous membrane have a low strength because of excessive amount of low-molecular-weight components. The Mw/Mn is used as a standard of the molecular weight distribution. The greater the ratio is, the broader the molecular weight distribution is. Therefore, the greater the Mw/Mn of a polyolefin consisting of single component is the broader the molecular weight distribution is. The Mw/Mn of a polyolefin consisting of single component can be adjusted appropriately by preparing polyolefin by a multistage polymerization. It is preferable that the multistage polymerization is performed by two stages of polymerization in which high-molecular-weight components are polymerized at the first stage and low-molecular-weight components are polymerized at the second stage. The greater the Mw/Mn of a polyolefin consisting of mixed components is, the greater the difference among Mws of the components. On the other hand, the smaller the Mw/Mn is the smaller the difference among Mws of the components. The Mw/Mn of a polyolefin composition can be set appropriately by adjusting the mixing proportion and the molecular weight of each component.

In order to improve a meltdown temperature and improve a high-temperature storage characteristics of a battery to which the polyolefin microporous membrane is applied, it is possible that the polyolefin contains polypropylene (PP) as well as polyethylene. It is preferable that the Mw of the polypropylene is 1 x 10⁴ to 4 x 10⁶. The polypropylene may be a homopolymer, and alternatively may be a block copolymer and/or a random copolymer containing another α-olefin. It is preferable that 80 mass parts of the polypropylene is added to 100 mass parts of a whole polyolefin composition (polyethylene + polypropylene).

In order to improve a battery separator characteristics, it is possible that the polyolefin contains a polyolefin component to give a shutdown function to the battery. The polyolefin component giving the shutdown function may be an LDPE. The LDPE may be at least one selected from a group consisting of branched LDPE, linear LDPE (LLDPE), ethylene/α-olefin copolymer made in the presence of single site catalyst and low molecular weight PE of which Mw is 1 x 10³ to 4 x 10³.

It is possible that an arbitrary component such as polybutene-1, polyethylene wax and ethylene/α-olefin copolymer is added to the polyethylene component containing the UHMWPE.

### [Manufacturing method of polyolefin microporous membrane]

A manufacturing method of a polyolefin microporous membrane comprises: process (1) in which a membrane-forming solvent is added to a polyolefin and then the melt is blended to prepare a polyolefin solution; process (2) in which the polyolefin solution is extruded from a die lip and then is cooled to form a gel-like molding; primary stretching process (3) in which the gel-like molding is stretched at least unidirectionally; process (4) in which the membrane-forming solvent is removed; process (5) in which obtained membrane is dried; secondary stretching process (6) in which the dry membrane is stretched at least unidirectionally again. It is possible that the processes (1) - (6) are followed by a process, such as heat treatment process (7), cross-linking process (8) by ionization radiation, hydrophilizing process (9) and surface-coating process (10), as needed.

### (1) Preparation process of polyolefin solution

An appropriate membrane-forming solvent is added to a polyolefin and is melted to be blended to prepare a polyolefin solution. It is possible that an additive, such as antioxidant, ultraviolet absorber, anti-blocking agent, color, dye and inorganic filler, is added to the polyolefin solution as needed without deteriorating the advantage of the present invention.

The membrane-forming solvent may be a liquid solvent or a solid solvent. The liquid solvent may be a cyclic or aliphatic hydrocarbon such as nonane, decane, decalin, paraxylene, undecane, dodecane and liquid paraffin, or a mineral oil fraction having a boiling point corresponding to them. In order to obtain a gel-like molding having a stable content of solvent, it is preferable that the liquid solvent is an nonvolatile liquid solvent such as a liquid paraffin. The liquid solvent may be used together with a solid solvent.

It is preferable that the liquid solvent has a viscosity of 30 to 500cSt at 25°C, and preferably 50 to 200cSt. The viscosity less than 30cSt would make it difficult to perform a blending and to uniformly discharge the Polyolefin solution from the die lip. On the other hand, the viscosity more than 500cSt would make it difficult to remove the liquid solvent.

It is preferable that the melt-blending process is performed uniformly in an extruder. Such a process is suitable for preparing a high-concentration solution of polyolefin. It is preferable that a melting temperature is 10 to 100°C higher than the melting point of the polyolefin. The melting point is determined according to the Differential Scanning Calorimetry (DSC) based on JIS K7121. Although the membrane-forming solvent may be added before starting the blending process, it is preferably added in the extruder during the blending process. In the melt-blending process, it is preferable that an antioxidant is added to prevent the polyolefin from oxidizing.

The polyolefin solution containing the polyolefin and membrane-forming solvent has a polyolefin content of 1 to 50 mass% to 100 mass% in total, and preferably has a polyolefin content of 20 to 40 mass%. The polyolefin content less than 1 mass% might cause an excessive swell or neck-in when the polyolefin solution is extruded, so that the gel-like molding deteriorates in the formability and self-supporting ability. On the other hand, the polyolefin content more than 50 mass% might deteriorate the formability of the gel-like molding.

### (2) Forming process of gel-like molding

The melt-blended polyolefin solution is extruded directly from the extruder or is extruded from a die with another extruder, and alternatively, it is cooled and pelletized to be extruded from the die with the extruder. Although it is usual that a die lip having a rectangular nozzle for making sheets, another type of die lip may be used. A die lip for coextruding may be used to make a multilayer gel-like molding. It is preferable that a heated solution is extruded at an extrusion speed of 0.2 to 15m/min.

Such a solution extruded from the die lip is cooled to make a gel-like molding. It is preferable that it is cooled at a speed of no less than 50°C/min down to the gelling temperature. Such a cooling process can stabilize a micro phase separation structure (gel structure consisting of polyolefin phase and membrane-forming solvent phase) made from polyolefin phase by the membrane-forming solvent. It is preferable that it is cooled down below 25°C. In general, the slower cooling speed would make a quasi-cell unit grow greatly so that the gel-like molding has a coarser higher-order structure. The faster cooling speed would make a dense cell unit. The cooling speed less than 50°C/min would increase the crystallinity, so that the gel-like molding might be undesirable for being stretched. The cooling process may be performed by contacting the solution with a cooling roll, refrigerant such as cold wind and coolant water or the like.

### (3) Primary stretching process

Thus obtained gel-like molding sheet is stretched at least unidirectionally. The stretching process causes a cleavage between polyolefin crystal lamellar layers, so that the polyolefin phase is micronized to make large numbers of fibrils. The fibrils are formed into a randomly-connected three dimensional network structure. The gel-like molding containing the membrane-forming solvent can be stretched uniformly. After heating the gel-like molding, the primary stretching can be performed by a predetermined magnification by a method such as tenter method, roll method, inflation method, rolling method or combination thereof. The primary stretching may be a monoaxial stretching, and is preferably a biaxial stretching. The biaxial stretching may be sequentially performed, and is preferably performed simultaneously.

It is preferable that the monoaxial stretch magnification is more than or equal to 2-fold, and is preferably 3- to 30-fold as depending on the thickness of the gel-like molding. It is preferable that the biaxial stretch magnification in each direction is set to more than or equal to 3-fold corresponding to the area magnification of more than or equal to 9-fold, so as to improve the pin puncture strength. The area magnification less than 9-fold would be insufficient to prepare a polyolefin microporous membrane having a high elasticity and high strength. On the other hand, the area magnification more than 400-fold might have a restriction about types of stretching apparatus or stretching operation, or the like.

It is preferable that the primary stretching is performed at a temperature which is lower than or equal to the polyolefin melting point + 10°C. It is more preferable that it is performed at a temperature which is higher than or equal to the crystalline dispersion temperature and which is less than the melting point. The stretching temperature of more than the melting point + 10°C might make the resin melt to prevent the molecular chain from being oriented. On the other hand, the stretching temperature less than the crystalline dispersion temperature might soften the resin insufficiently so that the membrane is broken under a high stretch magnification. The crystalline dispersion temperature is determined according to the dynamic viscoelastic temperature characteristics measurement based on ASTM D4065. The crystalline dispersion temperature of PE as a polyolefin is generally 90 to 100°C. Therefore, the polyolefin consisting of PE is stretched at 90 to 140°C, preferably at 100 to 130°C.

### (4) Membrane-forming solvent removal process

The membrane-forming solvent can be removed (washed off) with a washing solvent. Because the polyolefin phase is phase-separated from the membrane-forming solvent, a porous membrane is obtained by removing the membrane-forming solvent. The washing solvent can be a well-known solvent and may be chlorinated hydrocarbon such as methylene chloride and carbon tetrachloride, hydrocarbon such as pentane, hexane and heptane, fluorinated hydrocarbon such as ethane trifluoride, ether such as diethyl ether and dioxane or volatile solvent such as methyl ethyl ketone.

The washing process can be performed by immersing a stretched membrane in the washing solvent or showering a stretched membrane with the washing solvent while a combination thereof may be also employed. It is preferable that the washing solvent of 300 to 30,000 mass parts is added to the membrane of 100 mass parts. The washing process is usually performed at 15 to 30°C, and may be performed as being heated as needed. It is preferable that the washing is performed until the residual concentration of the membrane-forming solvent decreases to less than 1 mass% with respect to the added amount.

A microporous membrane roll of the present invention is efficiently applicable to a microporous membrane manufactured through a solvent removal process because a polyolefin microporous membrane tends to take charge during being washed.

### (5) Membrane drying process

A membrane obtained through the stretching process and membrane-forming solvent removal process is dried by heating drying method, air-drying method or the like. It is preferable that the drying process is performed at a temperature of lower than or equal to the crystalline dispersion temperature of the polyolefin, and is preferably performed at a temperature of lower than or equal to the crystalline dispersion temperature minus 5°C.

It is preferable that the residual content of the washing solvent in the microporous membrane is less than or equal to 5 mass% with respect to the membrane weight of 100 mass% after the drying process, and is preferably less than or equal to 3 mass%.

### (6) Secondary stretching process

The dried membrane is stretched again at least unidirectionally. The secondary stretching can be performed as being heated by a method such as tenter method as well in the primary stretching process. The secondary stretching may be a monoaxial stretching or a biaxial stretching. The biaxial stretching may be sequentially performed, and is preferably performed simultaneously.

It is preferable that the secondary stretching is performed at a temperature which is lower than or equal to the polyolefin crystalline dispersion temperature + 20°C, and is preferably lower than or equal to the crystalline dispersion temperature + 15°C. It is preferable that the secondary stretching is performed at a temperature which is higher than or equal to the polyolefin crystalline dispersion temperature. The secondary stretching temperature of more than the crystalline dispersion temperature + 20°C might deteriorate the compressive resistance, fail to uniformly give sheet-width directional physical properties when stretched in TD direction, or particularly fail to uniformly give the air permeability in the stretched sheet-width direction. On the other hand, the secondary stretching temperature less than the crystalline dispersion temperature might soften the resin insufficiently so that the membrane tends to be broken or stretched non-uniformly. The polyolefin consisting of PE is stretched at 90 to 120°C, preferably at 95 to 115°C.

It is preferable that the secondary stretching speed is more than or equal to 3%/sec in the stretching axial direction. For example, the monoaxial stretching speed is preferably more than or equal to 3%/sec in the longitudinal direction (Machine Direction; MD direction) or in the width direction (Transverse Direction; TD direction). On the other hand, the biaxial stretching speed is preferably more than or equal to 3%/sec in each of the MD direction and the TD direction. The biaxial stretching may be performed simultaneously, sequentially or performed in multiple stages (which may be a combination of simultaneous biaxial stretching and sequential stretching). The stretching speed [%/sec] in the stretching direction refers to a length growth speed per 1 sec with respect to 100% unstretched length in a region to be stretched secondarily. The stretching speed less than 3%/sec might deteriorate the compressive resistance, fail to uniformly give sheet-width directional physical properties when stretched in TD direction, or particularly fail to uniformly give the air permeability in the stretched sheet-width direction. Further, the productivity might deteriorate. It is preferable that the secondary stretching speed is more than or equal to 5%/sec, more preferably more than or equal to 10%/sec. As to the biaxial stretching, it is preferable that stretching speeds, which may be different above 3%/sec in the MD direction and TD direction, are the same to each other. It is preferable that the secondary stretching speed is less than or equal to 50%/sec from a viewpoint of prevention of break.

It is preferable that the monoaxial stretch magnification in the secondary stretching process is 1.1- to 2.5-fold. As to the monoaxial stretching, it is preferable that the stretch magnification is 1.1- to 2.5-fold in the MD direction or TD direction. As to the biaxial stretching, it is preferable that the stretch magnifications are 1.1- to 2.5-fold in the MD direction and TD direction. As to the biaxial stretching, it is preferable that stretch magnifications, which may be different within 1.1- to 2.5-fold in the MD direction and TD direction, are the same to each other. The magnification less than 1.2-fold might bring about an insufficient compression resistance. On the other hand, the magnification more than 2.5-fold might make a membrane tend to break or deteriorate in heat-resistant shrinkage. It is preferable that the secondary stretch magnification is 1.1- to 2.0-fold.

### (7) Heat treatment process

It is preferable that the secondarily stretched membrane is heat treated. The microporous membrane is heated to stabilize the crystal to make the lamellar layer uniform. The heat treatment may be a heat setting and/or a heat relaxing, and is preferably the heat setting. The heat setting process may be performed by a tenter method, roll method or rolling method. The heat setting process is performed at a temperature which is lower than or equal to 10°C + melting point of the polyolefin which constitutes the microporous membrane. It is preferably performed at a temperature which is higher than or equal to the crystalline dispersion temperature and which is lower than or equal to the melting point.

The heat relaxing process may be performed by a tenter method, roll method, rolling method, belt conveyor method or a floating method. The heat relaxing process is performed at a temperature which is lower than or equal to the melting point of the polyolefin microporous membrane. The process is preferably performed at a temperature which is higher than or equal to 60°C and is lower than or equal to the melting point minus 5°C. In the heat relaxing process, it is preferable that a length is shrunk as keeping the lower limit of 91% relative to the length before the secondary stretching process. The lower limit of the shrunk length is preferably 95% of the unstretched length before the secondary stretching process. The shrinkage less than 91% might deteriorate the balance of physical properties, such as air permeability in particular, in the sheet-width direction after the secondary stretching process. Such a heat relaxing process could improve the balance of the air permeability and strength. It is possible that a plurality of the heat setting processes and heat relaxing processes are combined together.

### (8) Cross-linking process of membrane

The secondarily stretched microporous membrane may be subjected to a cross-linking process with ionizing radiation.

### (9) Hydrophilizing process

The secondarily stretched microporous membrane may be hydrophilized. The hydrophilizing may be a monomer grafting, surfactant treatment, corona discharge treatment or plasma treatment. Thus obtained hydrophilized microporous membrane should be dried. In order to improve the air permeability in the drying process, it is preferable that the polyolefin microporous membrane is heated at a temperature which is lower than or equal to the melting point as preventing the shrinkage. In order to prevent the shrinkage, it is possible that the hydrophilized microporous membrane is heated as described above.

### (10) Surface-coating process

It is possible that the secondarily stretched microporous membrane is coated on the surface with polypropylene, a porous fluorinated resin such as polyvinylidene fluoride and polytetrafluoroethylene or with another porous body such as polyimide and polyphenylene sulfide so that a battery separator as an application improves in meltdown characteristics.

### [Characteristics of polyolefin microporous membrane]

Microporous membranes according to the present invention desirably have the following physical properties.

An air permeability (as Gurley value according to the air permeability measurement based on JIS P8117) is 20 to 800 sec/100cm³ (film thickness 20µm conversion). Such an air permeability could give a good battery cycle characteristic and a great battery capacity to battery separators to which a microporous membrane roll of the present invention is applied. The air permeability less than 20 sec/100cm³/20µm might fail to shut down appropriately when the temperature inside the battery increases.

A porosity may be 25 to 80%, and is preferably 30 to 60%. The porosity less than 25% might fail to provide a good air permeability. On the other hand, the porosity more than 80% might provide a battery separator made from the microporous membrane with an insufficient strength so that the electrode short-circuits.

A pin puncture strength may be more than or equal to 1,500mN (film thickness 20µm conversion). The pin puncture strength less than 1,500mN (film thickness 20µm conversion) might short the electrode of a battery separator made from the microporous membrane. It is preferable that the pin puncture strength is more than or equal to 3,000mN (film thickness 20µm conversion).

A tensile strength at break may be more than or equal to 20,000kPa both in the MD direction and TD direction. Such a tensile strength would prevent the membrane breakage. It is preferable that the tensile strength at break is more than or equal to 50,000kPa both in the MD direction and the TD direction.

The tensile elongation at break may be more than or equal to 100% both in the MD direction and the TD direction. Such a tensile elongation would prevent the membrane breakage.

A heat shrinkage rate after being exposed for 8 hours at 105°C may be less than or equal to 15% both in the MD direction and TD direction. The heat shrinkage rate more than 15% might shrink a heated terminal of a lithium battery separator made from the microporous membrane so that the electrode tends to short. It is preferable that the heat shrinkage rate is less than or equal to 10% both in the MD direction and TD direction.

A coefficient of friction, particularly between microporous membranes, is preferably smaller. It may be difficult to adjust because it is often affected by the raw polymer formulation as well as the surface condition of microporous membrane. Generally, the greater coefficient of friction would cause the stronger peeling charge at the time of unwinding. A microporous membrane roll according to the present invention could suppress the electric potential rising effectively even if the microporous membrane has a greater coefficient of friction. The present invention can be advantageous particularly if a coefficient of static friction is more than or equal to 0.8 and a coefficient of dynamic friction is more than or equal to 0.3.

A film thickness of the microporous membrane is appropriately selected depending on use. In order to apply it to a battery separator, it is preferable that the film thickness is 5 to 50µm, and is preferably 10 to 35µm. The microporous membrane may be a single membrane or a multi-layered membrane.

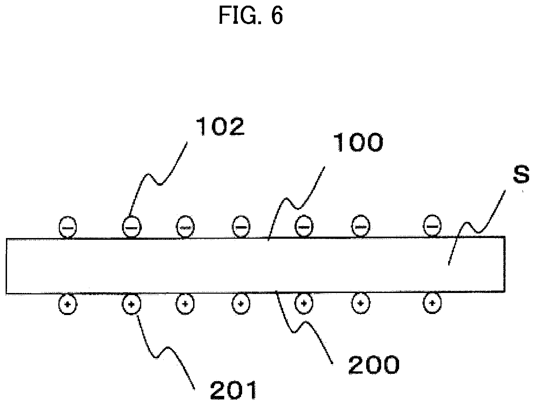

Although the amount of charge on the respective surfaces (the surface and the back face) of the microporous membrane is preferably smaller, it is difficult to control in an actual manufacturing process. Hereinafter, the surface will be called the first surface while the back face will be called the second surface. Fig. 6 shows a condition phrased as "Opposite polarity charging on the respective surfaces of the microporous membrane" in which first surface 100 is charged positively or negatively while second surface 200 is charged negatively or positively, respectively. Such an opposite polarity charging process of the first and second surfaces can be achieved by giving ion or the like from the second surface to the first surface which has been charged positively or negatively and giving the opposite charge to the second surface to electrically neutralize the membrane. Fig. 6 shows an example of a charged state in which first surface 100 having negative static charge 102 and second surface 200 having positive static charge 201 are balanced with the same charge density as well as the same charge amount. First surface is covered almost uniformly with negative static charge while second surface is covered with almost uniformly with positive static charge. In the microporous membrane in the charged state shown in Fig. 6, the surface electric potential can be measured as being substantively zero while the surface electric potential is -2kV to +2kV. Namely, the sum of electrostatic charge is approximately zero because negative charge 102 on first surface 100 has an opposite polarity to positive charge 201 on second surface 200.

To such an oppositely charged respective surfaces of the microporous membrane, a general static neutralizing device to generate the ion wind to neutralize electricity doesn't work. In other words, the ion generated by the static neutralizing device is not attracted to the microporous membrane having an apparent electric potential around zero because electric field is shielded inside the microporous membrane with the opposite charge on the respective surfaces. If the surface and the back face have different absolute charge, only the unbalanced charge could be neutralized. After the static neutralization, the microporous membrane would be electrically balanced in static charge having opposite polarity on the respective surfaces.

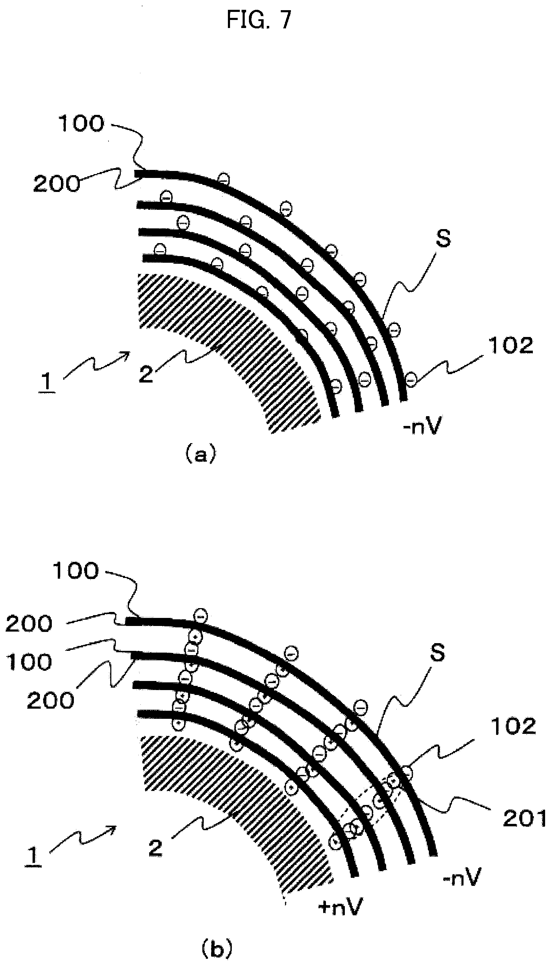

Fig. 7 (b) partially shows such a state in which a film having oppositely-charged first surface 100 facing outside and second surface 200 facing inside is wound to be layered on winding section of core 1 so that the opposite charges on the first surface and the second surface accumulate electric double layers to generate a great difference in electric potential between the innermost first surface and the outermost second surface. In Fig. 7 (b), the outermost layer has electric potential of -nV (n: arbitrary value) while the innermost layer has electric potential of +nV (n: arbitrary value). The microporous membrane would have a greater electric potential generated with the electric double layers if the number of layers is greater or back side equilibrium potential (to be described later) of each layer is greater. There is a problem that the microporous membrane or core might be strongly charged electrically when such a microporous membrane roll with the electric double layers is unwound. The mechanism can be estimated as follows.

At a peeling point between the core and microporous membrane to be unwound, positive/negative charges which have been balanced move to exchange the static charge to the inner layer of the microporous membrane to be unwound, so that the unwound microporous membrane is charged. The amount of the static charge exchanged between the layers is proportional to the potential difference (or electric field intensity) between the outermost surface and the inner surface (facing to the core) of the film to be peeled as being unwound. Namely, the exchanged amount is proportional to the absolute value of the back side equilibrium potential of the respective surfaces of the microporous membrane. According to the inventors' knowledge, the electric potential increases gradually toward the outermost layer in the microporous membrane roll. Accordingly, the electric potential of the microporous membrane roll increases the amount of negative charge corresponding to the outer surface polarity as shown in Fig. 7 (b).

The back side equilibrium potential in this description will be explained. "Back side equilibrium potential" on the first surface of a microporous membrane is an electric potential measured on the first surface with a surface electrometer having a measurement probe (which has a small measurement opening diameter around 1mm; e.g. Monroe Electronics; Probe 1017: opening diameter 1.75mm or Probe 1017EH: opening diameter 0.5mm, etc.) being approached to the microporous membrane by 0.5mm to 2mm from the first surface in a condition where a grounded conductor is contacted to the opposite surface (back face) or approached thereto more closely than any of 20% of microporous membrane thickness and 10µm, and then the opposite electric charge having the same absolute charge as the charged back face is induced to the grounded conductor to substantively set the electric potential to zero (equilibrium) on the back face. The back side equilibrium potential on the second surface is measured on the back face by a similar measurement method. Such a measurement of the back side equilibrium potential is a nondestructive measurement method and therefore the back side equilibrium potential V [V] of each surface of the microporous membrane can be measured by simply changing the surface to be approached to the grounded conductor. Further, a microporous membrane provided with a vapor-deposited electrically conductive layer made of metal or the like can be measured to determine the back side equilibrium potential on the microporous membrane while the vapor-deposited layer functions similarly to a metal roll.

The distribution of the electrostatic charge on first surface 100 can be determined by a two-dimensional mapping process from the data of back side equilibrium potential which are measured sequentially while the surface electrometer probe or the sheet attached to the grounded conductor on the back face is run at a low speed (around 5mm/sec) with a moving means such as XY-stage capable of positioning. The back side equilibrium potential on the second surface is measured by a similar method. The microporous membrane may have the surface and the back face charged with reversed polarities of the same value wherein an area ratio of 75% to total 100% ratio is charged with an electrical polarity (positive or negative) while the other area ratio of less than 25% is charged with the other electrical polarity (negative or positive).

In this description, the expression "charged with reversed polarities of the same value on the respective surfaces of the microporous membrane" means that the total back side equilibrium potential on the first surface and the second surface is almost the same as the total back side equilibrium potential at a predetermined portion in an electric insulative sheet. The total of back side equilibrium potential on the first surface and the second surface may be -10 [V] to +10 [V]. Further, the difference between the absolute maximum value and absolute minimum value of the back side equilibrium potential may be less than or equal to 20V within 0.5m from each portion in the in-plane distribution of back side equilibrium potential on respective surfaces in a condition in which the surface and back face are charged uniformly with the same polarity. The average between the back side equilibrium potentials on the first and second surfaces may be set arbitrarily.

The surface electric potential is usually measured with the sheet floating in the air (wherein no conductor presents close to the back face). If electric charges on the surface and the back face of the microporous membrane have reversed polarities of the same value, the membrane is charged with reversed polarities of the same value while the surface electric potential is almost 0 [V] theoretically. On the other hand, if the charges are not balanced between the respective surfaces of the microporous membrane, the surface electric potential becomes greater (around kV order). The surface electric potential to be measured usually tends to be affected on surrounding conductors or the like because of a long distance from the grounding conductor, so that the reproducibility is generally low. On the other hand, because the back side equilibrium potential is measured in a condition where the grounding conductor presents on the opposite surface of the film, the reproducibility is generally high.

Fig. 7 (b) shows only an example in which negative charge 102 on first surface 100 and positive charge 201 on second surface 200. However, it is possible that the microporous membrane has positive charge 101 on first surface 100 and negative charge 202 on second surface 200. The area proportion of a polarity inversion is less than or equal to 25% (1/4). The polarity inversion may be performed in the longitudinal direction or width direction of the microporous membrane. While the area proportion is allowed up to 1/2, if the polarity is inverted by 1/4 as a half thereof, a half of the total charge can be balanced out to suppress the charging. The portion which is not charged substantively with potential of -15 to +15V should not be regarded as an area of the polarity inversion. Such a portion should be regarded as keeping the same polarity when the area proportion of the polarity reversal is calculated.

As a result of measuring the charged state of the microporous membrane charged with reversed polarities of the same value, the inventors found that the charging would be suppressed by the present invention if the absolute values of the back side equilibrium potential is more than or equal to 3V and less than or equal to 150V on the first surface and the second surface. If the absolute value of back side equilibrium potential is more than 150V, the unwound film might be charged and an electric discharge might be generated.

In the technology disclosed in Patent document 1, it is likely that a magnetic recording media film having the first surface and/or the second surface charged with the same polarity, as shown in Fig. 7 (a). Such an implication is based on the fact that the friction electrification usually causes a constant polarity on films. In Fig. 7 (a), all layers from the inner layer to the outer layer have the same negative charges. Therefore electric potential V of the roll made by winding the film on the core is negative electric potential. Fig. 7 (a) shows that the roll has electric potential of -nV.

Patent document 1 includes paragraphs such as paragraph [0016] describing that a technology for suppressing static electricity by winding a sheet on a resinous core having both an electrically conductive portion and an insulative portion makes it possible to increase the electric capacitance and decrease the electric potential. Such an effect can be expressed with a relation formula of Q = CV, where V [V] implies an electric potential, C [µF] implies an electric capacitance and Q implies an electric charge. As to a microporous membrane roll made by a sheet like thin material such as microporous membrane, capacitance per unit area can be calculated by the formula of C = ε₀εᵣ/t, where C implies electric capacity per unit area on parallel plates, ε₀ implies the dielectric constant in vacuum (8.854 x 10⁻¹² [F/m]), εᵣ implies a dielectric constant of the film and t implies a thickness [m]. According to the relation formula of Q = CV, potential V is proportional to charge Q and is inversely proportional to capacitance C. If charge Q is constant, the greater capacitance C is the smaller potential V is.

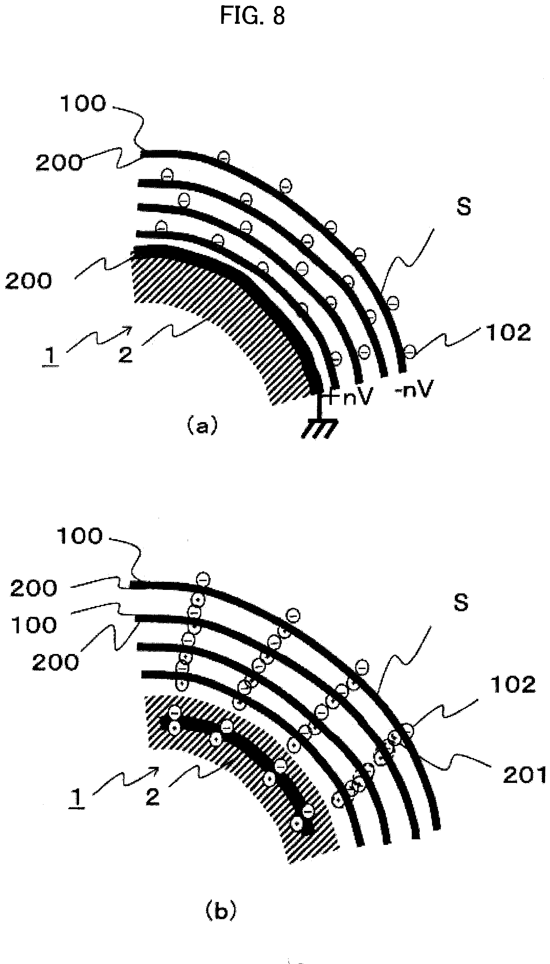

According to the inventors' knowledge, it is inevitably necessary for the electrically conductive portion of the insulative core is grounded to the earth in order to increase the capacitance to the earth. In the technology disclosed in Patent document 1, as shown in Fig. 7 (a), the capacitance to the earth is equal to a combined capacitance to which the smallest capacity primarily contributes, in a series of core and resin film (or microporous membrane) connected. Therefore, the capacitance of the insulative portion of the resinous core and the capacitance of the film are dominant. Therefore, it is necessary that the electrically conductive portion in the resinous core is formed on the outermost surface of the resinous core and is grounded so that the insulative portion of the resinous core has no capacitance, according to the inventors' knowledge. This state is shown in Fig. 8 (a). The capacitance to the earth cannot be increased by the free electrically conductive portion of the resinous core without connecting the earth.

The Example of Patent document 1 discloses a winding drive apparatus having a core bearing in which the electrically conductive portion of the resinous core is grounded through the core bearing and the winding drive apparatus.

The present invention is suitable to a film having an electric double layer formed by charging with reversed polarity. It is advantageous for preventing the electric potential from appearing to the outside by forming the electric double layer with capacitance of 50pF to 1nF, so that the electric potential of the microporous membrane roll is hardly increased when unwound. Thus the inventors found that the electric double layer is prevented from being formed by providing an electrically conductive portion which is grounded to neither a part of the core nor the inside in a roll made from a microporous membrane having the first surface and second surface charged with reversed polarity of the same value. Such a configuration is shown in Fig. 8 (b). The inventors estimate that the eccentrically-located free electrons on the electrically conductive portion stabilize a piece of the film (or a microporous membrane) to have a pair of positive and negative charges on the first and second surface, so that the electric potential hardly appears on the outermost layer and innermost layer. Because the electric potential hardly appears on the outermost layer and innermost layer, the electric charge is prevented from moving when the microporous membrane is unwound. Namely, it is thought that a pair of positive and negative reversed charges which a single microporous membrane used to have is balanced.

The above-described effect can be achieved even in a condition where a part of the core or the inside is grounded, so that the electrically conductive portion suppresses the formation of electric double layer.

On the other hand, the film charged with reversed polarities on the respective surfaces has an advantage as well as the above-described problem. In order to laminate the film (or microporous membrane) without displacement, the frictional resistance can be enhanced with a coulomb force between electrostatic charge on the film and the base material, while the top surface of the film can be rubbed with cloth or the like to develop a great adhesion strength. Further, in order to make a roll, the first and second surfaces are adhered to each other with the coulomb force between electrostatic charge outside the first surface and electrostatic charge inside the second surface which have polarities opposite to each other, so that the displacement is hardly generated when wound. Such a configuration makes it possible to stabilize the handling ability in laminating or element winding process when the microporous membrane is applied to a separator of a secondary cell such as lithium ion battery.

The film charged with reversed polarities of the same value on the respective surfaces can be achieved by making at least a surface charged positively or negatively and then neutralizing the other surface electrically. Here, it is preferable that the film is charged by 3V to 150V by controlling the static neutralization condition. In other words, the residual charge could improve the winding shape by the coulomb force generated between the films by the difference of charging polarities on respective surfaces of the film and could prevent the user from contacting the conveyer roll so as to be charged.

### [Core]

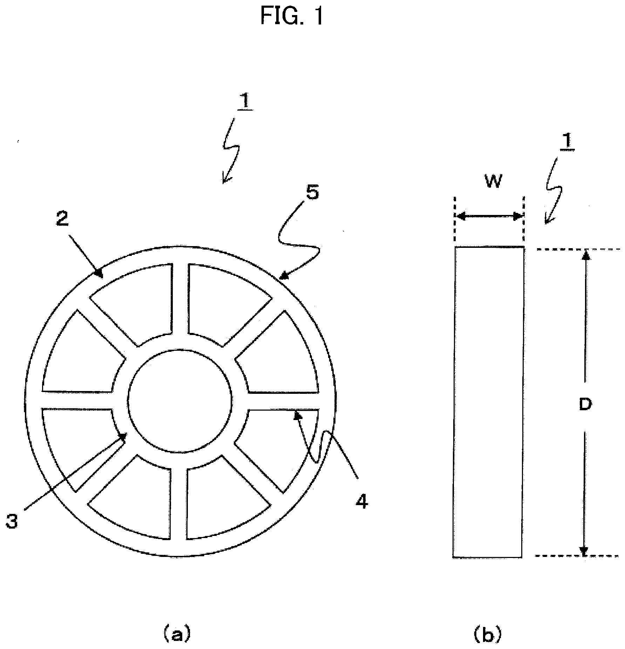

The core may be a conventional core having a well-known shape. Fig. 1 shows an example of cylindrical core 1 comprising winding section 2 on which a microporous membrane is wound, bearing 3 through which a shaft is inserted and connecting portion (spoke) 4 connecting winding section 2 and bearing 3. In Fig. 1, winding surface 5 is an outer peripheral surface of winding section 2 on which the microporous membrane is wound. The outer diameter is more than 100mm, and the width is broader by 0 to 50mm than the width of the microporous membrane to be wound. For example, the core may have a size such as outer diameter of 200mm, inner diameter of bearing 3 of 75mm and width of 60mm. In order to wind a film (or microporous membrane) coated to give heat resistance, it is preferable that the core has a width of 300mm to 1500mm before and after the coating.

The core is made of an electrically conductive member partially or wholly. Namely, the core may be made of the electrically conductive member as a whole, and alternatively, it may be partially made of the electrically conductive member. It is not necessary that the electrically conductive member is exposed on the core surface. The electrically conductive member may be embedded inside the core. It is not necessary that a plurality of discontinuous electrically conductive portions of the electrically conductive member connects to each other and that the electrically conductive member is electrically grounded. It is possible that the electrically conductive member is layered, applied, pasted or vapor-deposited on the outer surface of the core, and that the core is made from the electrically conductive member. It is also possible that an electrically conductive material is mixed with the insulative resin to form a electrically conductive member and that the electrically conductive material is formed as inserted to the inside. It is preferable that an outer or inner surface of the core is provided with a electrically conductive portion so that the scratch which might be made by a contact in the transportation or settings is easily fixed. It is also preferable that a electrically conductive member is layered, applied or pasted on the winding surface of the core.

The reasons why the core should be partially or wholly made of an electrically conductive member are as follows. As a countermeasure of static electricity for the microporous membrane roll, the microporous membrane roll should have a small surface electric potential. Concretely, it is effective that the membrane is wound on a resinous core having an electrically conductive portion as well as an insulative portion. If a paper or resin as a general material of the core having an insulation property has an electrically conductive portion, the capacitance to the earth can be increased and the surface electric potential of the roll is decreased by balancing the electric double layer in its own charged with reversed polarities of the same value on the respective surfaces of the film (or microporous membrane).

The electrically conductive member comprises an electrically conductive material such as metals and electrically conductive resin, as well as an electrically conductive resin composition made by mixing resin and electrically conductive material of carbon black or the like. It is preferable that the electrically conductive member has a surface resistance of less than or equal to 10⁸Ω/□, preferably less than or equal to 10⁶Ω/□. The surface resistance of more than 10⁸Ω/□ might not achieve the inventive advantage that the respective surfaces of a single film can balance the electric double layer which is charged with reversed polarities of the same value.

On the other hand, portions other than the electrically conductive member are made from nonelectrically conductive materials which are typical electrically insulative members such as paper, thermoplastic resin and thermosetting resin. From a viewpoint of handling ability, it is preferable that the portions other than the electrically conductive member are made from resin such as ABS resin in particular.

It is preferable that area A which is an area of the electrically conductive member on the winding surface of the core is more than 50% of contact area by which the microporous membrane contacts the core. Namely, the following relation formula is preferably satisfied: (A/B) x 100 ≥ 50. More preferably, (A/B) is more than 80% and is more preferably more than 90%. Because in a general core the contact area by which the microporous membrane contacts the core is the same as total area of the winding surface, the electrically conductive member covers the winding surface desirably by the broader area.

For example, a core made of ABS resin covered with a thin metal layer may be employed. The metal layer may be vapor-deposited on the surface. And alternatively, paste containing metal or the like may be applied to the surface or a metal foil may be pasted on the surface. For another example, an electrically conductive member may be embedded inside the electrically insulative member, or a metal layer or electrically conductive resin layer may be provided inside the winding section. For yet another example, a whole core may be made of an electrically conductive member, or a core molded with ABS resin containing electrically conductive particles such as carbon black. It is specifically preferable that the core is formed with a resin composition containing an electrically conductive resin or electrically conductive particles (electrically conductive component).

Because the winding surface contacts a starting part of microporous membrane to be wound, the winding surface desirably has a small surface roughness. The surface roughness is Ra (arithmetical average roughness) determined according to JIS B0601. It is preferably less than or equal to 5.0µm, more preferably less than or equal to 3.0µm, and is further preferably less than or equal to 2.0µm. The surface roughness no more than 5.0µm could prevent the microporous membrane from being affected by unevenness on the winding surface. The lower limit is practically more than or equal to 0.01µm. It is preferable that an average surface roughness is less than or equal to 3.0µm in a winding surface width direction (core width direction). In order to achieve a desirable surface roughness, well-known methods such as grinding can be employed.

It is preferable that the core has a coefficient of thermal expansion absolute value of less than or equal to 100 x 10⁻⁶/K. It is more preferably less than or equal to 50 x 10⁻⁶/K. The coefficient within the above-described range could prevent to microporous membrane from being applied with unnecessary stress to deteriorate characteristics because the core neither expand nor shrink in an ambient temperature even in transporting or storing the microporous membrane roll for a long time.

### [Manufacture of roll]

Thus formed microporous membrane is wound on a core. The original sheet of microporous membrane having a width of hundreds to thousands mm is cut into a desirable width in a slitting process. The slitting process is sometimes repeated by several times to make a final product of microporous membrane roll (product to be supplied) having a core made of an electrically conductive member.

The winding process and slitting process of the microporous membrane can be performed with conventional apparatuses. It is preferable that the microporous membrane is slit into a predetermined width in a slitting process and then is wound as controlling the winding tension. It is preferable that the winding tension is controlled to almost the same as the unwinding tension which is applied to unwind the membrane from the roll before being slit. Concretely, it is preferable that the winding tension is controlled within the unwinding tension plus or minus 30%. In such a case, the microporous membrane is finally wound at a tension adjusted to a predetermined value with each of tension-adjustable winding apparatus.

In winding the microporous membrane on the core made of electrically conductive member, it is important that the roll is being neutralized electrically. Specifically, it is wound as keeping the surface electric potential -2kV to +2kV on the roll. Thus the electric potential on the roll should be lowered to suppress the potential rising caused by a peeling charging when the microporous membrane is unwound from the roll. Further, the surface electric potential of the single microporous membrane unwound from the roll is controlled within -5kV to +5kV, so that the deterioration and discomfort in the handling ability are prevented.

The surface electric potential can be adjusted by a conventional method. Specifically, it is preferable that the surface electric potential on the roll is adjusted by one or a plurality of a self-discharge type static neutralizing device, needle electrode type DC/AC static neutralizing device and air blower type static neutralizing device. Further, it is preferable that the diselectrification is performed in the air where the microporous membrane roll or a single microporous membrane doesn't contact. It is more preferable that the diselectrification is performed toward the winding point (contact point to tangent line) at which the microporous membrane is wound on the roll from the outside and/or inside. Further, the winding speed at which the microporous membrane is wound on the core made of electrically conductive member as electrically neutralizing the core is 30 to 200m/min.

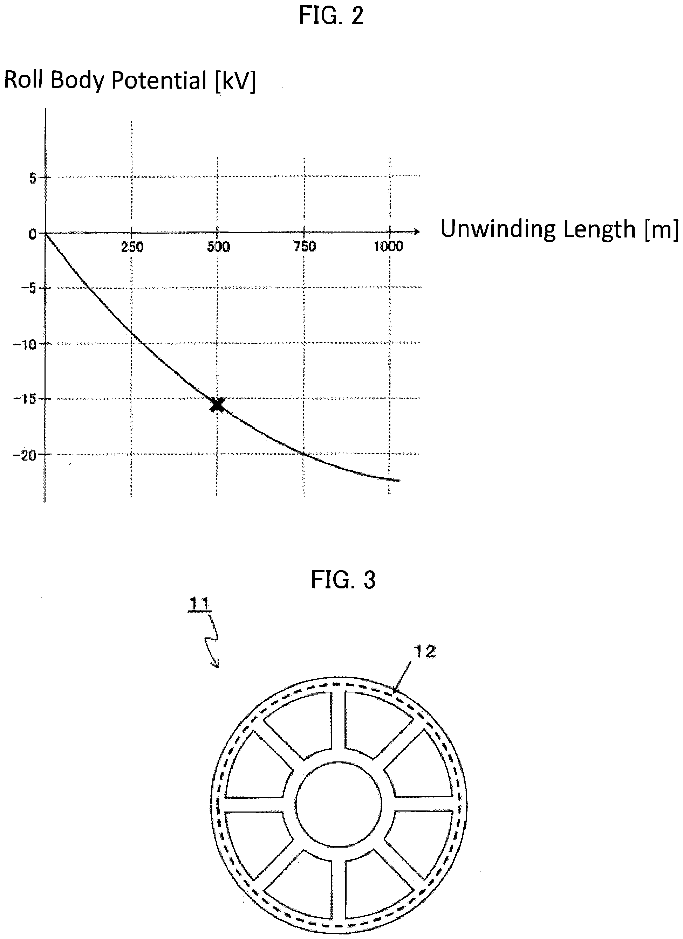

In the microporous membrane roll made by winding the microporous membrane on the core partially or wholly made of electrically conductive member to have a surface electric potential on the roll being wound of -2kV to +2kV, the surface electric potential on the microporous membrane to be unwound can be -5kV to +5kV. Thus the electric potential on the roll is kept low and the peeling charging and movement of electric charge are suppressed as unwinding the membrane, so that the handling ability is improved in making batteries. It is preferable that the surface electric potential is -2kV to +2kV when the microporous membrane is unwound. The surface electric potential when the microporous membrane is unwound is defined as a surface electric potential when the microporous membrane is unwound by 500m from the microporous membrane roll. The evaluation standard of unwinding by 500m has been employed for the following reasons. First, the unwinding by hundreds m might cause a substantial electric potential rising as shown in Fig. 2 to make it difficult to measure the electric potential. Second, because there are many microporous membrane wound bodies having a winding length less than 1000m, the unwinding by 500m is thought to be an evaluation standard suitable to precisely measure the surface electric potential with a comparatively small unwinding length.

The width and length (winding length) of the microporous membrane to be wound may be length of tens m to thousands m and width of several mm to several m. For example, the winding length is 50m to 5000m, preferably 100m to 3000m. The width is 10mm to 1500mm, preferably 20mm to 500mm. The microporous membrane may be laminated or coated with a heat-resistant coating layer on the surface.

It is preferable that a ratio (layer number/winding length) of the wound microporous membrane length (winding length: m) to the layer number (winding number: times) is less than or equal to 2.0.

The present invention could provide a microporous membrane roll in which the electric potential rising is suppressed to improve a discomfort as well as a handling ability, so as not to cause a problem that the microporous membrane might come close to and stick to the microporous membrane roll or surrounding apparatus even when a user loses hold of an unwound microporous membrane charged with static electricity.

### [Examples]

Hereinafter, embodiments of the present invention will be explained, though the present invention is not limited to them.

The following methods provide the evaluation of each physical property and the microporous membranes used in Examples and Comparative Examples.

### [Measurement of electric potential]

The surface electric potential of the microporous membrane is measured when wound the microporous membrane roll and when unwound by 500m from the microporous membrane roll. The measurement is performed in the following method.

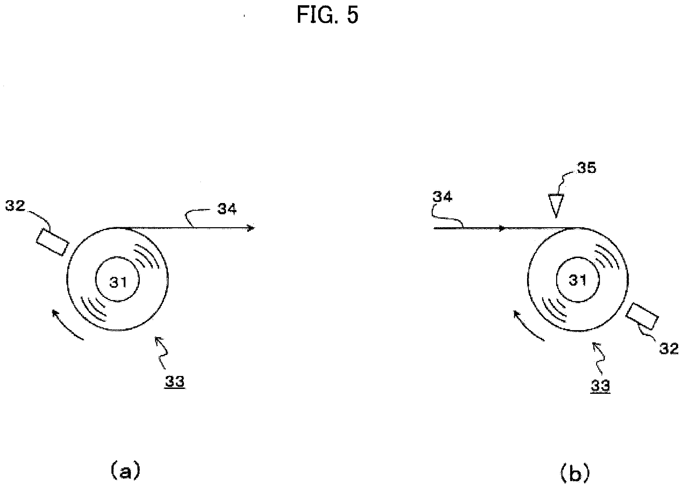

The surface electric potential up to 20kV is measured with Electrometer MODEL523 made by TRek, Inc. at a position of 30mm distant from the sample while the surface electric potential over 20kV is measured with KSD1000 made by KASUGA DENKI, Inc. at a position 100mm distant from the sample. Fig. 5 shows it schematically.

### [Measurement of surface resistance]

The surface resistance of the core is measured with surface resistance meter ST-4 made by SIMCO Japan.

### [Measurement of back side equilibrium potential]

"Back side equilibrium potential" on the first surface of a microporous membrane is an electric potential [V] measured on the first surface with a surface electrometer having a measurement probe (which has a small measurement opening diameter around 1mm; e.g. Monroe Electronics; Probe 1017: opening diameter 1.75mm or Probe 1017EH: opening diameter 0.5mm, etc.) being approached to the microporous membrane by 0.5mm to 2mm from the first surface in a condition where a grounded conductor is contacted to the opposite surface (back face) or approached thereto more closely than any of 20% of microporous membrane thickness and 10µm, and then the opposite electric charge having the same absolute charge as the charged back face is induced to the grounded conductor to substantively set the electric potential to zero on the back face. The back side equilibrium potential on the second surface is measured on the back face by a similar measurement method. Such a measurement of the back side equilibrium potential is a nondestructive measurement method and therefore the back side equilibrium potential V [V] of each surface of the microporous membrane is measured by simply changing the surface to be approached to the grounded conductor. The first surface and second surface have reversed polarities of the same value.

### [Measurement of capacitance]

The capacitance of the microporous membrane roll is measured as follows. The outermost layer of the microporous membrane roll is covered with an electrode made of metal such as aluminum foil over the surface. Further, the innermost layer of the roll reel fixed with the winding drive shaft is covered with an electrode made of metal such as aluminum foil over the inner periphery. The capacitance between the electrodes is determined at 1 kHz frequency with an impedance analyzer LF41924A (made by Hewlett-Packard Co.).

### [Measurement of coefficient of friction]

A sample of 25mm (TD) x 200mm (MD) is placed on a plane. On the sample, another sample having 18mm width (TD) wound on a column of 5mmϕ along MD direction is placed as subjected to load of 30g. This is run at 50mm/min on the sample placed on the plane while the coefficient of static friction and coefficient of dynamic friction are measured.

### [Film thickness]

The film thickness of four corners of 10 x 10cm sample is measured by using a 10R gauge head with a micro gauge made by Mitutoyo Corporation. The measured values are averaged.

### [Air permeability]

In order to determine the air permeability (sec/100cm³; 20µm conversion), air permeability P₁ which is determined for the microporous membrane having film thickness of T_{AV} according to JIS P8117 is converted to air permeability P₂ at 20µm film thickness using the formula of P₂ = P₁/T_{AV}.

### [Porosity (%)]

The porosity is determined by formula of porosity [%] = (w₂-w₁)/w₂ x 100 where w₁ implies microporous membrane mass and w₂ implies nonporous membrane mass of the same sized same polyethylene composition as the microporous membrane.

### [Pin puncture strength]

The pin puncture strength (mN; 20µm conversion) is determined as load S' calculated by formula of S' = S/T_{AV} at 20µm thickness, where maximum load S (load [mN] just before penetrated) is determined by inserting a needle of 1mm diameter having on the tip a spherical surface (curvature radius R: 0.5mm) at 2mm/sec of speed through the microporous membrane having film thickness T_{AV}.

### [Tensile strength at break]

The tensile strength is determined with a strip sample having 10mm width according to ASTM D882.

### [Manufacture of microporous membrane]

### (Microporous membrane A)

0.2 mass parts of tetrakis[methylene-3-(3,5-ditertiary butyl-4-hydroxyphenyl]-propionate] methane as an antioxidant is dry-blended with 100 mass parts of polyethylene (melting point: 135°C; crystal dispersion temperature: 100°C) which consists of 30 mass% of ultra-high molecular weight polyethylene PE1 (Mw/Mn: 8.0) having Mw 2.0 x 10⁶ and 70 mass% of high density polyethylene PE2 (Mw/Mn: 8.6) having Mw 3.0 x 10⁵ to prepare a polyethylene composition. 40 mass parts of thus prepared polyethylene composition is put in a twin-screw extruder (cylinder inner diameter: 58mm; screw ratio of Length (L)/Diameter (D): 42; strong blend kneading type) to which 60 mass parts of liquid paraffin [50cst (40°C)] is supplied through a side feeder of the twin-screw extruder to be melt-blended at 210°C and 390rpm in the twin-screw extruder to prepare a polyethylene solution. Thus prepared polyethylene solution is extruded through a T die provided on the tip of the twin-screw extruder to be taken up onto a cooling roll regulated at 40°C to form a gel-like molding. Thus obtained gel-like molding is subjected to a simultaneous biaxial stretching process (first stretching) by 5 x 5 times at 118°C with a tenter and then is subjected to a heat setting at 95°C. Next, the stretched sheet of the gel-like molding is immersed in a washing tank of methylene chloride and is washed to remove liquid paraffin. The washed membrane is air-dried and heated to 126°C and is stretched again (second stretch) by 1.4 times in TD direction with a tenter, and is subjected to a heat setting as held with the tenter at 126°C (for total 26sec during the second stretching and heat setting) to make a polyethylene microporous membrane.

The Mw and Mw/Mn of the resin are determined with an integral curve obtained under a predetermined measurement condition [measurement instrument: GPC-150C made by Waters Corporation; temperature: 135°C; solvent: o-dichlor benzene; density: 0.1 mass% (injection quantity: 500µl); column: Shodex UT806M made by Showa Denko K.K.; solvent speed: 1.0ml/min, dissolution condition: 135°C/1h]. The predetermined value in the measurement condition is based on polyethylene.

The microporous membrane is found to have the following physical properties: thickness is 16µm; air permeability (Gurley value) is 80sec/100cm³ (20µm conversion); porosity is 53%; pin puncture strength is 3432mN (20µm conversion); tensile strengths at break are 73,553kPa (MD direction) and 93,167kPa (TD direction). The obtained microporous membrane has back side equilibrium potentials of -45V on the first surface and +45V on the second surface.

### (Microporous membranes B - J)

Microporous membranes B - J are manufactured by the same method of microporous membrane A described above except that the raw polyethylene composition and manufacturing conditions are changed as shown in Table 2. Thus obtained microporous membranes have back side equilibrium potentials from -10V to -149V on the first surface and from +5V to +145V on the second surface.

The physical properties of microporous membranes B - J are shown in Table 2.

### Comparative Example 1

A core which is shaped as shown in Fig. 1 and is made of insulative resin (ABS resin) is employed. The core has outer diameter of 200mm (8 inches), width of 50mm and surface resistance of 10¹³Ω/□. The capacitance is 10pF.

The above-described microporous membrane A is wound on this core. Microporous membrane A has winding length of 1000m and width of 50mm, while it is wound at winding speed of 50m/min. As shown in Fig. 5 (b), the membrane is wound and is electrically neutralized with a static neutralizing device ("SS-50" made by SIMCO Japan) provided by 50mm distance at the same time of measuring the surface electric potential. It is wound at winding speed of 50m/min and the surface electric potential is measured as shown in Fig. 5 (a).

### Comparative Example 2

The core shown in Comparative Example 1 is subjected to an antistatic treatment. For the antistatic treatment, antistatic agent ("COLCOAT 200" made by Colcoat Co., Ltd.) is applied on the winding surface of the core to make the surface resistance 10⁹Ω/□. Microporous membrane A is wound on this core in the same way as Comparative Example 1. As well, the surface electric potential is measured in the same way as Comparative Example 1. The capacitance is 22pF.

### Example 1

A core which is shaped as shown in Fig. 1 and is made of electrically conductive resin (polyethylene blended with carbon black; carbon black content 16wt%) is employed. The core size is the same as Comparative Example 1 while the surface resistance is 10⁶Ω/□. The capacitance is 400pF. Microporous membrane A is wound on this core in the same way as Comparative Example 1. As well, the surface electric potential is measured in the same way as Comparative Example 1.

### Example 2

A core which is shaped as shown in Fig. 1 and is made of electrically conductive resin (polyethylene blended with carbon black; carbon black content 19wt%) is employed. The core size is the same as Comparative Example 1 while the surface resistance is 10⁴Ω/□. The capacitance is 670pF. Microporous membrane A is wound on this core in the same way as Comparative Example 1. As well, the surface electric potential is measured in the same way as Comparative Example 1.

### Example 3

A core which is shaped as shown in Fig. 1 and is made of aluminium is employed. The core size is the same as Comparative Example 1 while the surface resistance is 10⁰Ω/□. Microporous membrane A is wound on this core in the same way as Comparative Example 1. As well, the surface electric potential is measured in the same way as Comparative Example 1.

### Example 4

A core which is shaped as shown in Fig. 1 and is made of aluminium is employed. The core size is the same as Comparative Example 1 while the surface resistance is 10⁰Ω/□. Microporous membrane A is wound on this core in the same way as Comparative Example 1 except that the core is grounded. As well, the surface electric potential is measured in the same way as Comparative Example 1.

### Example 5

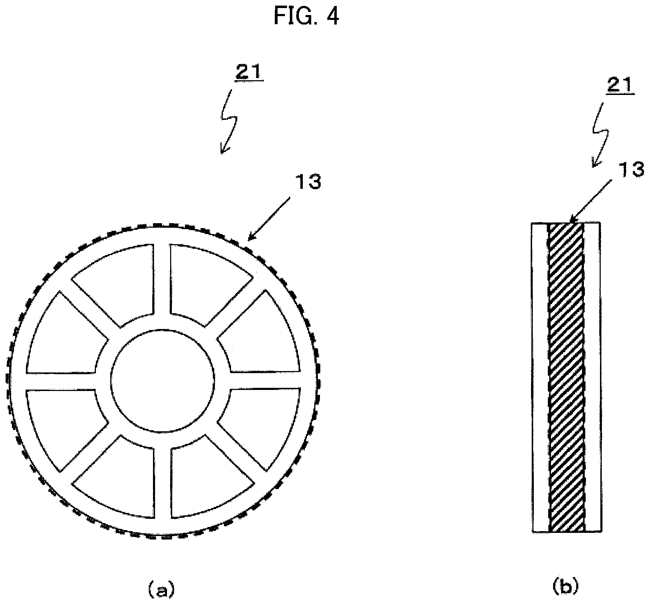

The core (outer diameter: 200m = 8 inches; width: 50mm) which is shown in Fig. 4 and is made of insulative resin (ABS resin) covered with an aluminum tape (thickness 100µm) over the winding surface (outer peripheral surface) is employed. The aluminum tape is not grounded. The surface resistance of the core is 10⁰Ω/□. The capacitance is 120pF. Microporous membrane A is wound on this core in the same way as Comparative Example 1. As well, the surface electric potential is measured in the same way as Comparative Example 1.

### Example 6

The core (outer diameter: 200m = 8 inches; width: 50mm) which is shown in Fig. 4 and is made of insulative resin (ABS resin) pasted with an aluminum tape (thickness 100µm) having a half width of the winding surface (outer peripheral surface) so that the outer peripheral surface overlaps the center line of the metal tape is employed. The surface resistance of the portion pasted with the aluminum tape on the core is 10⁰Ω/□. The capacitance is 88pF. Microporous membrane A is wound on this core in the same way as Comparative Example 1. As well, the surface electric potential is measured in the same way as Comparative Example 1.

### Example 7

A core made of insulative resin (ABS resin) shown in Fig. 3 in which an aluminum band (thickness 100µm) having the same width as the winding section is embedded into the winding section is employed. The core size is the same as Comparative Example 1 while the surface resistance is 10⁰Ω/□. The capacitance is 130pF. Microporous membrane A is wound on this core in the same way as Comparative Example 1. As well, the surface electric potential is measured in the same way as Comparative Example 1.

### Example 8

A core made of insulative resin (ABS resin) shown in Fig. 3 in which an electrically conductive resin layer (thickness 1mm) having the same width as the winding section is provided inside the winding section is employed. The core size is the same as Comparative Example 1 while the surface resistance is 10⁴Ω/□. The capacitance is 210pF. Microporous membrane A is wound on this core in the same way as Comparative Example 1. As well, the surface electric potential is measured in the same way as Comparative Example 1.

### Example 9

A microporous membrane roll is manufactured by the same way as Example 2, except that the membrane is wound to be evaluated without being electrically neutralized.

The surface electric potential of the roll at the winding process is -3kV because the membrane has not been electrically neutralized when wound.

### Examples 10 - 18

A microporous membrane roll is manufactured by the same way as Example 2, except that microporous membranes B - J are wound to be evaluated.

**[Table 1]**

| | Core | | | Microporous Membrane | Winding conditions | | Unwinding conditions | | |
|---|---|---|---|---|---|---|---|---|---|
| | Members other than Electrically Conductive member | Electrically Conductive member | Surface Resistance | | Surface Potential of Roll | Static Neutralization | Core grounding | Surface potential of Roll (unwound by 500m) | Handling ability |
| | | | Ω/□ | | kV | | | kV | |
| Comparative Example 1 | Insulating resin (ABS) | - | 10¹³ | A | -1 | Neutralized | Not grounded | -16 | NG |
| Comparative Example 2 | Insulating resin (ABS) antistatic surface treated | - | 10⁹ | A | -1 | Neutralized | Not grounded | -10 | NG |
| Example 1 | - | Electrically Conductive resin (CB-blended PE) | 10⁶ | A | -1 | Neutralized | Not grounded | -4 | Good |
| Example 2 | - | Electrically Conductive resin (CB-blended PE) | 10⁴ | A | -1 | Neutralized | Not grounded | -2 | Good |
| Example 3 | - | Metal | 10⁰ | A | -1 | Neutralized | Not grounded | -1 | Good |
| Example 4 | - | Metal | 10⁰ | A | -1 | Neutralized | Grounded | -1 | Good |
| Example 5 | Insulating resin (ABS) | Whole Winding surface pasted with Metal tape | 10⁰ | A | -1 | Neutralized | Not grounded | -2 | Good |
| Example 6 | Insulating resin (TABS) | Half Winding surface pasted with Metal tape | 10⁰ | A | -1 | Neutralized | Grounded | -3 | Good |
| Example 7 | Insulating resin (ABS) | Winding section with Metal band | | A | -1 | Neutralized | Not grounded | -4 | Good |
| Example 8 | Insulating resin (ABS) | Winding section with Electrically Conductive resin layer inside | 10⁴ | A | -1 | Neutralized | Not grounded | -5 | Good |
| Example 9 | - | Electrically Conductive resin (CB-blended PE) | 10⁴ | A | -3 | Not neutralized | Not grounded | -3 | Good |
| Example 10 | - | Electrically Conductive resin (CB-blended PE) | 10⁴ | B | -1 | Neutralized | Not grounded | -2 | Good |
| Example 11 | - | Electrically Conductive resin (CB-blended PE) | 10⁴ | C | -1 | Neutralized | Not grounded | -2 | Good |
| Example 12 | - | Electrically Conductive resin (CB-blended PE) | 10⁴ | D | -1 | Neutralized | Not grounded | -2 | Good |
| Example 13 | - | Electrically Conductive resin (CB-blended PE) | 10⁴ | E | -1 | Neutralized | Not grounded | -2 | Good |
| Example 14 | - | Electrically Conductive resin (CB-blended PE) | 10⁴ | F | -1 | Neutralized | Not grounded | -2 | Good |
| Example 15 | - | Electrically Conductive resin (CB-blended PE) | 10⁴ | G | -1 | Neutralized | Not grounded | -2 | Good |
| Example 16 | - | Electrically Conductive resin (CB-blended PE) | 10⁴ | H | -1 | Neutralized | Not grounded | -3 | Good |
| Example 17 | - | Electrically Conductive resin (CB-blended PE) | 10⁴ | I | -1 | Neutralized | Not grounded | -2 | Good |
| Example 18 | - | Electrically Conductive resin (CB-blended PE) | 10⁴ | J | -1 | Neutralized | Not grounded | -3 | Good |

| | | | | | | | | | |
|---|---|---|---|---|---|---|---|---|---|
| Note) CB-blended PE: Carbon Black-blended PolyEthylene | | | | | | | | | |

**[Table 2]**

| | | | | Microporous Membrane | | | | | | | | | |
|---|---|---|---|---|---|---|---|---|---|---|---|---|---|
| | | | | A | B | C | D | E | F | G | H | I | J |
| PE Composition | PE1 | Mw | - | 2.0 x 10⁶ | 3.0 x 10⁵ | 3.0 x 10⁵ | 3.0 x 10⁵ | 3.0 x 10⁵ | 3.0 x | 3.0 x 10⁵ | 3.0 x 10⁵ | 3.0 x 10⁵ | 3.0 x 10⁵ |
| | | Mw/Mn | - | 8.0 | 8.6 | 8.6 | 8.6 | 8.6 | 8.6 | 8.6 | 8.6 | 13.5 | 13.5 |
| | | | wt% | 70 | 70 | 70 | 70 | 80 | 60 | 98 | 98 | 80 | 80 |
| | PE2 | Mw | - | 3.0 x 10⁵ | 2.0 x 10⁶ | 2.0 x 10⁶ | 2.0 x 10⁶ | 2.0 x 10⁶ | 2.0 x 10⁶ | 2.0 x 10⁶ | 2.0 x 10⁶ | 2.0 x 10⁶ | 2.0 x 10⁶ |
| | | Mw/Mn | - | 8.6 | 8.0 | 8.0 | 8.0 | 8.0 | 8.0 | 8.0 | 8.0 | 8.0 | 8.0 |
| | | | wt% | 30 | 30 | 30 | 30 | 20 | 40 | 2 | 2 | 20 | 20 |
| PE Solution | LP | | wt% | 23 | 30 | 30 | 30 | 25 | 25 | 40 | 40 | 30 | 30 |
| Membrane-forming conditions | First stretch | Stretch Magnitude | TD x MD | 5x5 | 5x5 | 5x5 | 5x5 | 5x5 | 5x5 | 5x5 | 5x5 | 5x5 | 5x5 |
| | | Temperature | degC | 118 | 117 | 114 | 115 | 114 | 112 | 119 | 118 | 114 | 114 |
| | Second stretch | Stretch Magnitude | TD | 1.4 | 1.0 | 1.2 | 1.4 | 1.0 | 1.4 | 1.4 | 1.4/1.2 | 1.0 | 1.0 |
| | | Temperature | degC | 126 | 127 | 128 | 128 | 127 | 129 | 130 | 130 | 124 | 126 |
| Physical properties | Thickness | | micron | 16 | 12 | 20 | 25 | 16 | 20 | 20 | 16 | 16 | 7 |
| | Air permeability | | sec/100cc (20mic-conversion) | 100 | 380 | 240 | 210 | 350 | 260 | 240 | 500 | 560 | 710 |
| | Porosity | | % | 53 | 40 | 45 | 47 | 38 | 44 | 40 | 30 | 35 | 30 |
| | Pin puncture strength | | sec/100cc (20mic-conversion) | 3432 | 5198 | 5688 | 5296 | 4805 | 6276 | 5100 | 5884 | 5198 | 6178 |
| | Tensile strength at break | MD | kPa | 73553 | 147105 | 147105 | 127491 | 132395 | 147105 | 112781 | 142202 | 147105 | 176526 |
| | | TD | kPa | 93167 | 107877 | 142202 | 142202 | 107877 | 181430 | 161816 | 171623 | 117684 | 127491 |
| | Coefficient of Static friction | | - | 2.3 | 1.2 | 1.9 | 2.3 | 1.2 | 2.0 | 1.0 | 0.8 | 1.3 | 0.8 |
| | Coefficient of Dynamic friction | | - | 0.9 | 0.6 | 0.8 | 0.8 | 0.6 | 0.8 | 0.5 | 0.4 | 0.7 | 0.5 |

| | | | | | | | | | | | | | |
|---|---|---|---|---|---|---|---|---|---|---|---|---|---|
| Note 1) PE: PolyEthylene, LP: Liquid paraffin | | | | | | | | | | | | | |

Table 1 shows evaluation results of Examples and Comparative Examples. As to the handling ability, the evaluation "Good" implies a case that the roll has an electric potential from -5kV to +5kV when unwound while the evaluation "NG" implies the other case. In comparison with a microporous membrane roll wound on a core having no electrically conductive member (shown in Comparative Examples 1 and 2), a microporous membrane roll wound on a core having an electrically conductive member has a smaller surface electric potential in the winding process and is excellent in handling ability as shown in Table 1. In addition, the effect of the static neutralization is found by comparing Example 2 and Example 9.

### Industrial Applications of the Invention

A microporous membrane roll according to the present invention is applicable to any separator membrane such as filtration membrane and dialyzer membrane or any isolation membrane such as separator for batteries and capacitors.

### Explanation of symbols

1, 11, 21, 31: core
2: winding section
3: bearing
4: connecting portion (spoke)
5: winding surface
12, 13: electrically conductive member
32: electrometer
33: roll
34: microporous membrane
35: static neutralizing device
100: first surface of microporous membrane
101: positive charge on first surface of microporous membrane
102: negative charge on first surface of microporous membrane
200: second surface of microporous membrane
201: positive charge on second surface of microporous membrane
102: negative charge on second surface of microporous membrane
D: core outer diameter
W: core width
S: microporous membrane

## Claims

1. A microporous membrane roll wherein a microporous membrane (34) is wound on a core (1, 11, 21, 31) which is partially or wholly made of an electrically conductive member (12, 13), **characterized in that** the microporous membrane (34) has a first surface (100) and a second surface (200) which are charged with reversed polarities of the same value, wherein the polarities of the first surface and the second surface are inverted by a ratio of 25% relative to a whole length in a longitudinal direction.

2. The microporous membrane roll according to claim 1, wherein the microporous membrane (34) has a capacitance of more than or equal to 50pF and less than or equal to 1000pF between an outermost outer periphery and an inner periphery of the core.

3. The microporous membrane roll according to claim 1 or 2, wherein an absolute value of back side equilibrium potential is more than or equal to 3V and less than or equal to 150V on the first surface (100) and the second surface (200).

4. The microporous membrane roll according to any of claims 1 to 3, wherein the electrically conductive member (12, 13) has a surface resistance of less than or equal to 10⁸Ω/□.

5. The microporous membrane roll according to any of claims 1 to 4, wherein an area A occupied by the electrically conductive member (12, 13) on a winding surface (5) of the core (1, 11, 21, 31) is more than or equal to 50% relative to an area B where the microporous membrane (34) makes contact with the core (1, 11, 21, 31).

6. The microporous membrane roll according to any of claims 1 to 5, wherein the electrically conductive member (12, 13) is partially or wholly embedded inside an electrically insulative member.

7. The microporous membrane roll according to any of claims 1 to 6, wherein the electrically conductive member (12, 13) is made of an electrically conductive resin.

8. The microporous membrane roll according to any of claims 1 to 7, wherein the microporous membrane (34) has a coefficient of static friction of more than or equal to 0.7 and a coefficient of dynamic friction of more than or equal to 0.3.

9. The microporous membrane roll according to any of claims 1 to 8, wherein the microporous membrane (34) has an air permeability of 20 to 800 sec/100cm³ as conversion of 20µm film thickness, a porosity of 25 to 80%, and an pin puncture strength of more than or equal to 1500mN as conversion of 20µm film thickness.

10. The microporous membrane roll according to any of claims 1 to 9, wherein a surface electric potential of the microporous membrane unwound is -5kV to +5kV.

11. The microporous membrane roll according to any of claims 1 to 10, wherein the microporous membrane (34) is used for a battery separator.

12. A method of manufacturing a microporous membrane roll according to claim 1, **characterized in that** the microporous membrane (34) is wound on the core (1, 11, 21, 31) which is partially or wholly made of the electrically conductive member (12, 13) and the microporous membrane (34) is electrically neutralized by a corona discharge treatment to set a surface electric potential to -2kV to +2kV on the roll.

## Patentansprüche

1. Eine mikroporöse Membranwalze, wobei eine mikroporöse Membran (34)auf einen Kern (1, 11, 21, 31) gewickelt ist, der teilweise oder vollständig aus einem elektrisch leitenden Bestandteil (12, 13) hergestellt ist, **dadurch gekennzeichnet, dass** die mikroporöse Membran (34) eine erste Oberfläche (100) und eine zweite Oberfläche (200) aufweist, die mit umgekehrten Polaritäten desselben Wertes geladen sind, wobei die Polaritäten der ersten Oberfläche und der zweiten Oberfläche um ein Verhältnis von 25%, relativ zu einer Gesamtlänge in einer Längsrichtung, invertiert sind.

2. Die mikroporöse Membranwalze nach Anspruch 1, wobei die mikroporöse Membran (34) eine Kapazität im Bereich von 50pF oder mehr und 1000pF oder weniger zwischen einem äußersten äußeren Umfang und einem inneren Umfang des Kerns aufweist.

3. Die mikroporöse Membranwalze nach Anspruch 1 oder 2, wobei ein Betrag des Rückseiten-Gleichgewichtspotentials größer oder gleich 3V und kleiner oder gleich 150V auf der ersten Oberfläche (100) und der zweiten Oberfläche (200) ist.

4. Die mikroporöse Membranwalze nach einem der Ansprüche 1 bis 3, wobei der elektrisch leitende Bestandteil (12, 13) einen Oberflächenwiderstand von 10⁸Ω oder weniger aufweist.

5. Die mikroporöse Membranwalze nach einem der Ansprüche 1 bis 4, wobei eine Fläche A, die von dem elektrisch leitenden Bestandteil (12, 13) auf einer Oberfläche (5) des Kerns (1, 11, 21, 31) zum Aufwickeln eingenommen wird, 50% oder größer relativ zu einem Bereich B ist, indem die mikroporöse Membran (34) einen Kontakt mit dem Kern (1, 11, 21, 31) ausbildet.

6. Die mikroporöse Membranwalze nach einem der Ansprüche 1 bis 5, wobei der elektrisch leitende Bestandteil (12, 13) teilweise oder vollständig in einem elektrisch isolierten Bestandteil eingebettet ist.

7. Die mikroporöse Membranwalze in einem der Ansprüche 1 bis 6, wobei der elektrisch leitende Bestandteil (12, 13) aus einem elektrisch leitenden Harz hergestellt ist.

8. Die mikroporöse Membranwalze nach einem der Ansprüche 1 bis 7, wobei die mikroporöse Membran (34) einen statistischen Reibungskoeffizienten von 0,7 oder mehr und einen dynamischen Reibungskoeffizienten von 0,3 oder mehr aufweist.

9. Die mikroporöse Membranwalze nach einem der Ansprüche 1 bis 8, wobei die mikroporöse Membran (34) eine Luftdurchlässigkeit von 20 bis 800 Sek/110cm³ als Umwandlung von 20µm Filmdicke, eine Porosität von 25 bis 80% und eine Nadelstichfestigkeit von 1.500 mN oder mehr als Umwandlung von 20µm Filmdicke aufweist.

10. Die mikroporöse Membranwalze nach einem der Ansprüche 1 bis 9, wobei ein elektrisches Oberflächenpotential der abgewickelten mikroporösen Membran -5kV bis +5kV beträgt.

11. Die mikroporöse Membranwalze nach einem der Ansprüche 1 bis 10, wobei die mikroporöse Membran (34) für einen Batterieseparator verwendet wird.

12. Ein Verfahren zur Herstellung einer mikroporösen Membranwalze nach Anspruch 1, **dadurch gekennzeichnet, dass** die mikroporöse Membran (34) auf den Kern (1, 11, 21, 31) aufgewickelt wird, der teilweise oder vollständig aus dem elektrisch leitenden Bestandteil (12, 13) hergestellt ist und die mikroporöse Membran (34) durch eine Koronaentladungsbehandlung elektrisch neutralisiert ist um ein elektrisches Oberflächenpotential auf der Walze von -2kV bis +2kV herzustellen.

## Revendications

1. Rouleau de membrane microporeuse dans lequel une membrane microporeuse (34) est enroulée sur un noyau (1, 11, 21, 31) qui est partiellement ou totalement constitué d'un organe électriquement conducteur (12, 13), **caractérisé en ce que** la membrane microporeuse (34) a une première surface (100) et une seconde surface (200) qui sont chargées avec des polarités inversées de la même valeur, dans lequel les polarités de la première surface et de la seconde surface sont inversées d'un rapport de 25 % par rapport à une longueur totale dans une direction longitudinale.

2. Rouleau de membrane microporeuse selon la revendication 1, dans lequel la membrane microporeuse (34) a une capacité supérieure ou égale à 50 pF et inférieure ou égale à 1000 pF entre une périphérie extérieure la plus à l'extérieur et une périphérie intérieure du noyau.

3. Rouleau de membrane microporeuse selon la revendication 1 ou 2, dans lequel une valeur absolue de potentiel d'équilibre de face arrière est supérieure ou égale à 3 V et inférieure ou égale à 150 V sur la première surface (100) et la seconde surface (200).

4. Rouleau de membrane microporeuse selon l'une quelconque des revendications 1 à 3, dans lequel l'organe électriquement conducteur (12, 13) a une résistance de surface inférieure ou égale à 10⁸Ω/□.

5. Rouleau de membrane microporeuse selon l'une quelconque des revendications 1 à 4, dans lequel une aire A occupée par l'organe électriquement conducteur (12, 13) sur une surface d'enroulement (5) du noyau (1, 11, 21, 31) est supérieure ou égale à 50 % par rapport à une aire B où la membrane microporeuse (34) établit un contact avec le noyau (1, 11, 21, 31).

6. Rouleau de membrane microporeuse selon l'une quelconque des revendications 1 à 5, dans lequel l'organe électriquement conducteur (12, 13) est partiellement ou totalement incorporé à l'intérieur d'un organe électriquement isolant.

7. Rouleau de membrane microporeuse selon l'une quelconque des revendications 1 à 6, dans lequel l'organe électriquement conducteur (12, 13) est constitué d'une résine électriquement conductrice.

8. Rouleau de membrane microporeuse selon l'une quelconque des revendications 1 à 7, dans lequel la membrane microporeuse (34) a un coefficient de frottement statique supérieur ou égal à 0,7 et un coefficient de frottement dynamique supérieur ou égal à 0,3.

9. Rouleau de membrane microporeuse selon l'une quelconque des revendications 1 à 8, dans lequel la membrane microporeuse (34) a une perméabilité à l'air de 20 à 800 s/100 cm³ en conversion d'épaisseur de film de 20 µm, une porosité de 25 à 80 %, et une résistance à la perforation par aiguille supérieure ou égale à 1500 mN en conversion d'épaisseur de film de 20 µm.

10. Rouleau de membrane microporeuse selon l'une quelconque des revendications 1 à 9, dans lequel un potentiel électrique de surface de la membrane microporeuse déroulée est de -5 kV à +5 kV.

11. Rouleau de membrane microporeuse selon l'une quelconque des revendications 1 à 10, dans lequel la membrane microporeuse (34) est utilisée pour un séparateur de batterie.

12. Procédé de fabrication d'un rouleau de membrane microporeuse selon la revendication 1, **caractérisé en ce que** la membrane microporeuse (34) est enroulée sur le noyau (1, 11, 21, 31) qui est partiellement ou totalement constitué de l'organe électriquement conducteur (12, 13) et la membrane microporeuse (34) est neutralisée électriquement par un traitement d'aigrettage pour régler un potentiel électrique de surface à -2 kV à +2 kV sur le rouleau.
